Europäisches Patentamt

European Patent Office

Office européen des brevets

(11) Publication number: **0 223 860 B1**

# EUROPEAN PATENT SPECIFICATION

(45) Date of publication of patent specification: **16.10.91**    (51) Int. Cl.⁵: **C02F 1/50, B01D 21/01**

(21) Application number: **86903570.9**

(22) Date of filing: **27.05.86**

(86) International application number:
**PCT/JP86/00268**

(87) International publication number:
**WO 86/07048 (04.12.86 86/26)**

The file contains technical information submitted
after the application was filed and not included in
this specification

(54) **GERMICIDAL AND PURIFYING AGENT FOR DRINKING WATER.**

(30) Priority: **28.05.85 JP 113146/85**

(43) Date of publication of application:
**03.06.87 Bulletin  87/23**

(45) Publication of the grant of the patent:
**16.10.91 Bulletin  91/42**

(84) Designated Contracting States:
**AT BE CH DE FR GB IT LI LU NL SE**

(56) References cited:
**JP-A-58 216 705**

(73) Proprietor: **Inagaki, Jitsuo**
**71, Aza Kamiyashiki Oaza Itsusiki, It-**
**susikicho**
**Hazugun Aichi 444-04(JP)**

(72) Inventor: **SHIMANISHI, Asao**
**31-29-501, Toyo 5-chome**
**Koto-ku, Tokyo 135(JP)**
Inventor: **ONO, Taisaburo**
**2-23-29, Nakahara, Hiratsuka-shi**
**Kanagawa 254(JP)**
Inventor: **INAGAKI, Jitsuo**
**71, Aza Kamiyashiki, Oaza Itsusiki**
**Itsusikicho, Hazugun, Aichi 444-04(JP)**

(74) Representative: **Dr. Elisabeth Jung Dr. Jürgen**
**Schirdewahn Dipl.-Ing. Claus Gernhardt**
**P.O. Box 40 14 68 Clemensstrasse 30**
**W-8000 München 40(DE)**

## Description

TECHNICAL FIELD

This invention relates to the use of a special sterilizing and water-purifying reagent for preparing drinking water from muddy water in fields or under a drinking water shortage environment. It also relates to a simple water-purifier suitable for practical use of that reagent.

BACKGROUND ART

As recently reported in newspapers, not only a food shortage but also a drinking water shortage has become a serious problem in Africa. A shortage of water is avoided by making use of rain or rivers as suppliers of drinking water, but diseases or infectious illnesses are likely to occur due to pathogenic bacteria in such water. To remedy such problems, sterilizing and water-purifying reagents are strongly requested in order to produce drinking water in urgent emergency cases so as to rescue human lives.

If rain water or river water could be immediately purified for preparing drinking water, it would be convenient even in field activities to camp out since it is then not necessary to carry a canteen of heavy weight in order to have a water supply.

A portable purifier is heretofore known, as disclosed, for example, in Japanese Patent Publication No. 40148/1977 official gazette, in which fluoride is added to water, fluoric ions are produced by ionization according to energization with a current, and bacterias contained in the water to be purified are sterilized by the fluoric ions thus produced. However, this purifier requires a lumped or particular self-soluble electrode to be filled in order to create a galvanic current as portable energizing means, which is expensive and therefore cannot be employed as the sterilizing and water-purifying reagent for drinking water to be supplied in large quantities in order to aid people in Africa as described above.

It is an object of this invention to provide a sterilizing and water-purifying reagent for preparing drinking water, which is harmless for the human body, capable of being inexpensively synthesized in industry and having excellent properties in respect of removing muddiness from water and sterilizing bacterias.

Another object of the invention is to provide a simple water-purifier which is suitable for use of a sterilizing and water-purifying reagent, thereby producing drinking water inexpensively.

DISCLOSURE OF THE INVENTION

This invention envisages the use of a vermiculite weathered from mica mineral or soil further weathered from the vermiculite which is dissolved in an aqueous inorganic acid solution as a sterilizing and water-purifying reagent for preparing drinking water. Such an acid solution contains as main ingredients various types of metal salts and nonmetal salts.

It is known from the literature (see Technical Encyclopedia of Ullmann, tome No.21, 4th edition, 1982, pp.398 to 400) that mica minerals, like phlogopit and biotit, form the mineral vermiculite under weathering conditions, which vermiculite has defined mineralogical properties (chemical composition, foliated structure, crystallisation in the monoclinic system, lattice parameter).

Soil is formed from vermiculite if the aggregates of crystals are disrupted by mechanical forces and thereby very small particles are formed, which, however, are consisting still of vermiculite (see in this context "Ullmann", page 399, lefthand column, 3rd para).

According to a preferred embodiment of the invention black mica is used in view of the effect of insolubilization and agglomeration of organic materials in the water to be purified.

According to the prior art disclosed in JP-A-58-216705 weathered granite can be dissolved in an acid and this acid extract shall be dried to a solid consistence. Such a pulver may be used in the treatment of waste water in order to flocculate any suspended solid matter contained therein. The preparation of drinking water, however, is not described therein.

To produce the sterilizing and water-purifying reagent used in this invention, a 25% aqueous sulfuric acid solution is, for example, added to the vermiculite weathered from black mica at a ratio of the vermiculite : aqueous sulfuric acid solution of 4:3 to 4:1 by weight, and the mixture is allowed to stand for several days while sometimes stirring the mixture, or the mixture is heated to 100°C and allowed to stand for several hours while agitating the mixture. Thus, the elements such as Si, Al, Mg, Fe, K and Na, and the oxides thereof in the raw material are eluated into the aqueous sulfuric acid solution to produce sulfate, oxide, double salt and complex salts of the metals and nonmetals. In addition, small amounts of sulfates of Li, Zr, V, Ni, Co, P, Ba and S contained as elements or oxides in the raw material are also produced, but no

2

detrimental heavy metals are contained in the reagent. The aqueous solution thus produced is used as it is or in a concentrated or diluted form as sterilizing and water-purifying reagent for preparing drinking water. When 25% hydrochloric acid is used instead of the 25% sulfuric acid and vermiculite is added to the hydrochloric acid at a ratio of 1:1 by weight and the mixture is then similarly reacted, a sterilizing and water-purifying reagent having a similar effect can be produced. In this case, there is an advantage in that the reaction time can be shortened.

In order to purify water of rain or river water in order to make it suitable as drinking water, at least the following treatment steps must be carried out:

(1) Filtration of rough dusts in the water

(2) Removal of substances suspended in the water (SS)

(3) Removal of soluble organic substances in the water:

These organic substances are dissolved in water to be purified due to the deccmposition of vegetables or animal organic substances. In other words, as organic substances saccharides, carbohydrates such as organic acids, proteins or amino acids and modified derivatives thereof, oil and fat and fatty acids and modified derivatives thereof are substances formed by such a decomposition and contained in water to be purified.

(4) Sterilization: Since many types of bacterias exist in the natural world and therefore are present in water to be purified, as many as possible bacterias must be sterilized.

When the sterilizing and water-purifying reagent used according to the invention is added to water to be purified, the reagent immediately reacts with the organic substances in the water while producing carbon dioxide gas, thereby transforming the organic substances such that they become insoluble in water, and thereby precipitating and agglomerating the substances. Simultaneously, it is also proved that visible suspended substances (SS) are also agglomerated; in this manner the reaction causes a strong sterilizing effect. Flocculated and thus precipitated and agglomerated matter can be filtered out by filter paper.

Since the sterilizing and water-purifying reagent used according to the invention simultaneously performs the removal of the soluble organic substances and the sterilization, the raw water can be purified to become suitable as drinking water by providing means for mixing or contacting the sterilizing and water-purifying reagent with the raw water and means for filtering the agglomerates and insoluble substances. Therefore, when a sterilizing and water-purifying chamber and a filtering chamber are separately or integrally provided in a vessel, the raw water to be treated can be purified in a simple apparatus.

The amount of the sterilizing and water-purifying reagent to be added to the raw water depends upon the degree of pollution of the raw water to be treated, but is generally approximately 100 to 200 ppm. Adding more than this amount does not cause any harm, but an excessive addition causes a decrease in the pH-value of the water. Therefore, it is preferable to neutralize the water with lime water or dilute caustic soda solution. When 100 to 200 ppm of lime water or caustic soda are added, the water becomes almost neutral (pH 6 to 7). But it is preferable to neutralize the water to a pH of 7, since the agglomerating effect is also enhanced by such a neutralization.

In some types of water to be treated there are contained small amounts of ionized substances. Such ions include cations of ammonia, calcium, manganese, or chlorine, fluorine, nitric acid, and nitrous acid. In this case, an ionized substance removing means is required in addition to the sterilizing and water-purifying reagent means and the filtering means in a purifier apparatus. For example, in order to remove anions, an active charcoal filtering layer is provided, and in order to remove cations, a vermion filtering layer is provided.

Vermion is a strong inorganic cation exchanger produced by subjecting vermiculite ore of South Africa to an inorganic chemical treatment. The exchange capacity of the vermion is, for example, approx. 2,000 meq (milli-equivalent) to ammonia ion. As the ionized substance removing means there may be used other known materials, such as an ion exchange resin.

Some type of water to be treated is slightly colored or generates an odor. In this case, decoloring or deodoring means are required. Such means include an active charcoal filtering layer.

When the sterilizing and water-purifying reagent according to the invention is used, a portable water-purifier can be readily provided.

More specifically, such a water-purifier according to the invention comprises a chamber for mixing the raw water to be treated and the sterilizing and water-purifying reagent according to the invention and a filtering chamber for filtering the mixture. When the mixture of the raw water to be treated and of the sterilizing and water-purifying reagent is prepared in another vessel, the water purifier may comprise only the filtering chamber. The filtering chamber may have only filter paper, but in order to eliminate any clogging of the filter paper (which will delay the filtering velocity) a suitable filler layer is preferably provided on the filter paper. The filler may include , for example, active charcoal, vermion, silica, alumina, zeolite, china clay, bentonite, kaolin and baked chaff carbon. A preferable embodiment of the filtering chamber has a chamber of a mixture comprising active charcoal and vermion, a vermion chamber and an active charcoal chamber sequentially stacked from the bottom, and filtering chambers filled with filter paper disposed at the upper and lower ends. The filter to be filled into the filtering chamber is preferably enclosed with a nonwoven fabric of Rayon cloth which does not corrode at all. Thus, when the filter effect is reduced, the filter may be simply exchanged. When this filtering chamber is used, most types of raw water to be treated can be ideally purified. The purified water may be dropped into a cup disposed at the bottom, or the apparatus may be provided with a chamber for receiving the water at the lower end of the filtering chamber. The chamber for mixing the raw water to be treated and the sterilizing and water-purifying reagent used according to the invention may be formed of separate vessels or formed integrally with the upper end of the filtering chamber.

In this case, the mixing chamber is preferably constructed such as not to flow down the water to be treated to the filtering chamber disposed thereunder at mixing time but to be opened by known means to flow down the treated water to the lower filtering chamber.

The sterilizing and water-purifying reagent used according to the invention can purify water in ponds, swamps, lakes or water of rain for preparing drinking water.

BRIEF DESCRIPTION OF THE DRAWING

Fig.1 is a front view of a purifier using a sterilizing and water-purifying reagent according to the invention.
Fig.2 is a perspective view of a filtering material bag,
Fig.3 is a perspective view of a drinking water outlet,
Fig.4 is a perspective view illustrating any other example of the drinking water outlet,
Fig.5 is a front view of continuous bags comprising predetermined quantities of the sterilizing and water-purifying reagent and chlorine as sterilizer, and
Fig.6 is a perspective view illustrating the purifier of the invention in the used state.

BEST MODE FOR CARRYING OUT THE INVENTION

EXAMPLE 1

0.5 ml of water-purifying reagent according to the invention were added as 25% aqueous sulfuric acid solution extract of vermiculite to 500ccm of rain water which contained approx. 500 pieces/ccm of colibacillus; the mixture was then stirred and passed through filter paper. When the filtrate was sampled to carry out a Colibacillus test, the colibacillus was reduced to less than 13 pieces/ccm.

EXAMPLE 2

0.1 vol.% of a 25% aqueous sulfuric acid solution extract of vermiculite was added to river water which contained colibacillus and organic substances. The mixture was neutralized with CaO, filtered through a vermion layer , and the filtrate was sampled and tested. The result was as in the following Table.

| Measuring items | Water to be treated | Treated water |
|---|---|---|
| Colibacillus (pieces/ccm | 1200 | 29 |
| BOD (ppm) | 2100 | 34 |
| SS (mg/ml) | 3800 | less than 1 |
| n-hexane extract | 2520 mg/ml | 4 mg/ml |

An embodiment of a water-purifier which employs the sterilizing and water-purifying reagent according to the invention will be described hereunder.

4

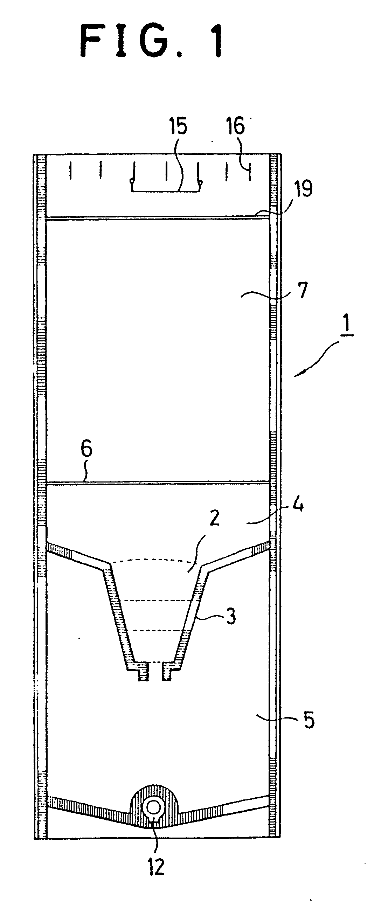

Fig.1 is a sectional view of such a water-purifier. A simple water-purifier body 1 of rectangular shape and open at the top is formed by heat sealing or sealing with high frequency wave a transparent or translucent plastic film or sheet. A funnel type holder 3 for detachably holding a filter bag 2 is coupled with the body in the purifier body 1. A raw water containing chamber 4 and a water-purifying chamber 5 are respectively formed at the top and bottom of the holder 3, and a sterilizing, precipitating and agglomerating chamber 7 is formed through switching means 6 at the top of the chamber 4.

The switching means 6 may employ known means such as for engaging an uneven portion formed, for example, at the inner surface or fixing a sheetlike magnet or a perchlori-fastener (magic fastener).

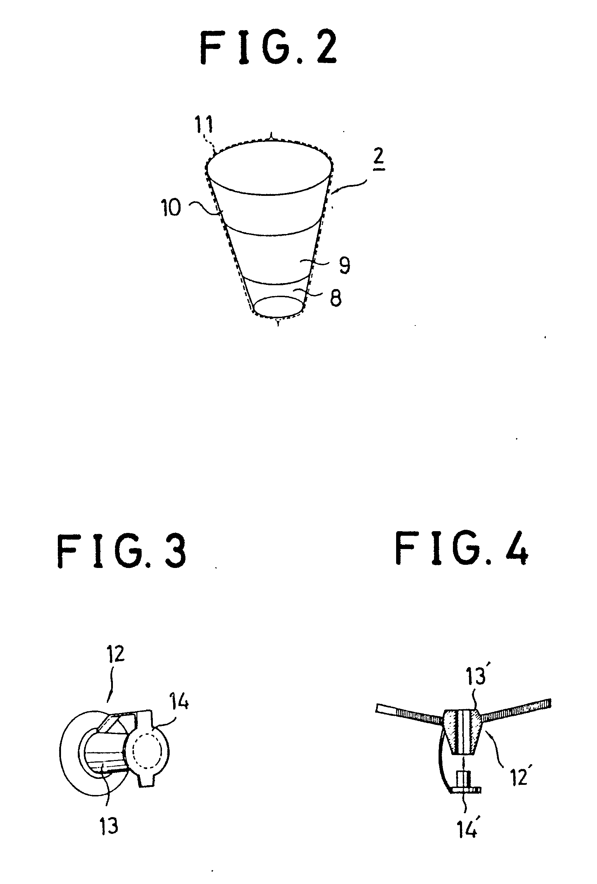

The filter bag 2 is constructed in the above embodiment by enclosing a laminate of filter fiber 8, active charcoal 9 and vermiculite 10 weathered from mica mineral sequentially stacked as shown in Fig.2 with filter paper 11. However, the invention is not limited to the particular embodiment. For example, one or more layers of fillers such as charcoal and silica and filter paper may be combined for this purpose.

The sterilizing, precipitating and agglomerating chamber 7 is for adding the sterilizing and water-purifying reagent according to the invention to the water to be treated thereby sterilizing the water and precipitating and agglomerating substances contained in the water to be treated.

An outlet 12 for producing purified water as drinking water is formed at the lower end side of the water-purifying chamber 5. The outlet is formed, as shown in Fig.3, laterally engaging a lateral outlet 13 with the projection of a plug 14. However, the invention is not limited to this particular embodiment. For example, as shown in Fig.4, the projection of a downward plug 14' is engaged with a drinking water outlet 13' at the bottom of the bag-like simple water purifier body.

A hole 15 for grasping by hand and a hole 16 for hanging the purifier by inserting a rod are formed at the top of the sterilizing, precipitating and agglomerating chamber 7. Since strong force is applied to the holes 15, 16 and the top end formed at the holes, the holes and the top end are preferably constructed with high strength.

In the embodiment described above, switching means 19 similar to the switching means 6 is formed at the top of the chamber 7. The swithing means 19 is provided to eliminate dusts from entering the purifier body by closing after the filtering is finished, but not always necessary in performing the invention.

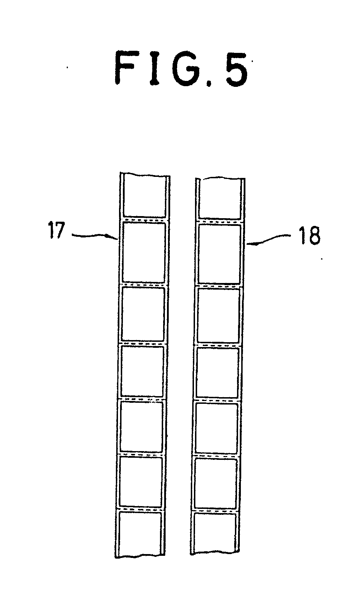

In order to purify raw water to be treated by the simple water-purifier of the invention, the switching means 6 is first closed to form the sterilizing, precipitating and agglomerating chamber 7, and the raw water to be treated is filled therein. As shown in Fig.5, one bag of continuous bags 17 which contains predetermined quantities of sterilizing, precipitating and agglomerating reagents is separated, filled in the water to be treated, and one of continuous bags 18 which seal predetermined quantities of chlorine sterilizer like bleaching powder is then separated and filled in the water to be treated. Further, it is preferable to fill a neutralizer such as CaO sealed in a predetermined quality in the water to be treated. The quantities of the sterilizing, precipitating and agglomerating reagents and the neutralizer in the continuous bags are, of course, determined in optimum amounts to be decided in response to the quantity of the raw water to be treated and presumed in advance. Thus, organic substances in the water to be treated are decomposed while generating carbon dioxide gas, the decomposed organic products are insolubilized, precipitated and agglomerated. The sterilizing effect is performed by the reaction.

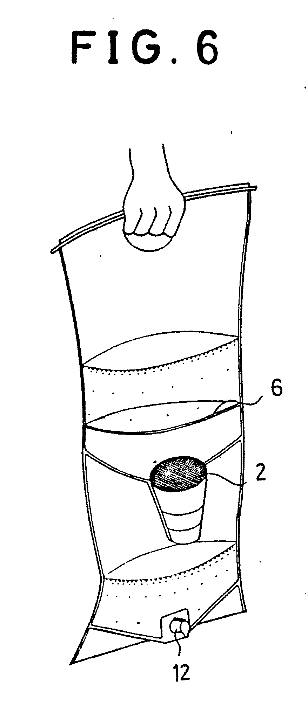

After the reaction is finished, the switching means 6 is opened, and the water is filtered through the filter bag 2 as shown in Fig.6. The water-purifier is preferably carried by hand during the filtering as shown in Fig.6, or hung by a rod. After the filtering, the purified water is then drained from the outlet 12 of the bottom of the purifier into a suitable vessel for drink.

INDUSTRIAL APPLICABILITY

As described above, the sterilizing and water-purifying reagent used according to the invention provides excellent effects as regards sterilizing of bacterias, decomposing organic substances and agglomerating the substances as compared with conventional sterilizing and water-purifying reagents of this type. Further, the sterilizing and water-purifying reagent used according to the invention can be produced very much less expensively, and it can readily purify rain water or river water. Additionally, when the sterilizing and water-purifying reagent according to the invention is used, a simple water-purifier can be readily and very inexpensively be produced. Thus, the simple water-purifier can be conveniently utilized in a district of drinking water shortage, like in Africa or in the field activities in a camp.

**Claims**

1. The use of a vermiculite weathered from mica mineral or soil further weathered from the vermiculite which is dissolved in an aqueous inorganic acid solution as a sterilizing and purifiying reagent for preparing drinking water.

2. The use of a vermiculite derived from black mica for the purpose of claim 1.

3. The use of a vermiculite derived from black mica and dissolved in aqueous hydrochloric acid for the purpose of claim 1.

4. The use of vermiculite derived from black mica and dissolved in aqueous sulfuric acid for the purpose of claim 1.

5. A method of sterilizing and purifying water to drinking water comprising adding an acidic additive containing as main ingredients various types of metal salts and nonmetal salts produced by dissolving vermiculite weathered from mica mineral or soil further weathered from the vermiculite in aqueous inorganic acid solution to the water to be treated, preferably in amounts of about 100 to 200 ppm, and then filtering the mixture.

6. A simple water purifier comprising a chamber for mixing a sterilizing and purifying reagent for producing drinking water containing an acidic additive containing as main ingredients various types of metal salts and nonmetal salts produced by dissolving vermiculite weathered from mica mineral or soil further weathered from the vermiculite in aqueous inorganic acid solution and the water to be treated, and comprising a chamber for filtering the mixture.

**Revendications**

1. Emploi d'une vermiculite désagrégée de mica par les intempéries ou de terre désagrégée ensuite de la vermiculite, dissoute dans une solution aqueuse d'acide minéral comme réactif de stérilisation et de purification pour préparer de l'eau potable.

2. Emploi d'une vermiculite provenant de mica noir pour l'objet de la revendication 1.

3. Emploi d'une vermiculite provenant de mica noir et dissoute dans de l'acide chlorhydrique aqueux pour l'objet de la revendication 1.

4. Emploi de vermiculite provenant de mica noir et dissoute dans de l'acide sulfurique aqueux pour l'objet de la revendication 1.

5. Procédé de stérilisation et de purification de l'eau en eau potable, comprenant l'ajout à l'eau à traiter d'un additif acide contenant comme composants principaux divers types de sels métalliques et de sels non métalliques, produit par dissolution de vermiculite désagrégée de mica par les intempéries ou de terre désagrégée de la vermiculite dans une solution aqueuse d'acide minéral, de préférence en quantités comprises entre environ 100 et 200 ppm, puis la filtration du mélange.

6. Purificateur d'eau simple comprenant une chambre pour mélanger un réactif de stérilisation et de purification destiné à produire de l'eau potable, contenant un additif acide contenant comme composants principaux divers types de sels métalliques et non métalliques, produit par dissolution de vermiculite désagrégée de mica ou de terre désagrégée de la vermiculite dans une solution aqueuse d'acide minéral, avec l'eau à traiter, et comprenant une chambre pour filtrer le mélange.

**Patentansprüche**

1. Die Verwendung eines Vermiculits, der durch Verwitterung aus Glimmermineral entstanden ist, oder von Bodenmaterial, das weiterhin durch Verwitterung aus dem Vermiculit entstanden ist, der(das) in einer wäßrigen Lösung einer anorganischen Säure gelöst ist, als Sterilisations- und Reinigungsreagens zur Aufbereitung von Trinkwasser.

2. Die Verwendung eines Vermiculits, der aus schwarzem Glimmer entstanden ist, für die in Anspruch 1 erläuterten Zwecke.

3. Die Verwendung eines Vermiculits, der aus schwarzem Glimmer entstanden ist und in wäßriger Salzsäure gelöst ist, für die in Anspruch 1 erläuterten Zwecke.

4. Die Verwendung eines Vermiculits, der aus schwarzem Glimmer entstanden ist und in wäßriger Schwefelsäure gelöst ist, für die in Anspruch 1 erläuterten Zwecke.

5. Ein Verfahren(Methode) zum Sterilisieren und Reinigen von Wasser,so daß es als Trinkwasser geeignet ist, welches die Zugabe eines sauren Zusatzstoffes, welcher als Hauptbestandteile verschiedene Arten von Metallsalzen und Nichtmetallsalzen enthält, welche durch Auflösen von Vermiculit, der durch Verwitterung aus Glimmermineral entstanden ist oder von Bodenmaterial, das weiter durch Verwitterung aus dem Vermiculit entstanden ist, in einer wäßrigen anorganischen Säurelösung erhalten wurden, zu dem zu behandelnden Wasser, vorzugsweise in Mengen von ca. 100 bis 200 TpM, und das Filtern der Mischung umfaßt.

6. Eine einfache Wasserreinigungsvorrichtung, die eine Kammer zum Mischen eines Sterilisations- und Reinigungsreagens zwecks Herstellung von Trinkwasser, enthaltend einen sauren Zusatzstoff, welcher als Hauptbestandteile verschiedene Arten von Metallsalzen und Nichtmetallsalzen enthält, hergestellt durch Lösen von Vermiculit, der durch Verwitterung aus Glimmermineral entstanden ist oder von Bodenmaterial, das weiter durch Verwitterung aus dem Vermiculit entstanden ist, in wäßriger anorganischer Säurelösung, und des zu behandelnden Wassers, und eine Kammer zum Filtern der Mischung umfaßt.

# FIG. 1

# F I G. 2

# F I G. 3

# F I G. 4

# FIG.5

17

18

# F I G. 6

6

2

12